# EUROPEAN PATENT SPECIFICATION

(11) **EP 1 433 659 B1**
(45) Date of publication and mention of the grant of the patent: **17.08.2005**
(21) Application number: 03257844.5
(22) Date of filing: 12.12.2003
(51) Int. Cl.: B60R 1/12, B60R 1/076, B60R 1/066, B60R 1/06

(54) **Outer mirror assembly**
Aussenrückspiegel
Retroviseur extérieur

(30) Priority: 20.12.2002 JP 2002369708; 20.12.2002 JP 2002370128; 15.05.2003 JP 2003136682
(43) Date of publication of application: 30.06.2004
(73) Proprietor: Murakami Corporation, Shizuoka-shi, Shizuoka, 422-8569 (JP)
(72) Inventor: Susuki, Hisaya, Fujieda-shi,Shizuoka (JP); Motomiya, Masahiro, Fujieda-shi,Shizuoka (JP); Yamana, Tohru, Fujieda-shi,Shizuoka (JP); Fukai, Akira, Fujieda-shi,Shizuoka (JP)
(74) Representative: Sutcliffe, Nicholas Robert

(56) References cited:
- EP-A- 0 333 220
- EP-A- 0 396 930
- EP-A- 0 761 502
- US-A- 4 890 907
- PATENT ABSTRACTS OF JAPAN vol. 1999, no. 03, 31 March 1999 (1999-03-31) -& JP 10 315928 A (HONDA MOTOR CO LTD), 2 December 1998 (1998-12-02)
- PATENT ABSTRACTS OF JAPAN vol. 011, no. 247 (M-615), 12 August 1987 (1987-08-12) -& JP 62 055239 A (MAZDA MOTOR CORP), 10 March 1987 (1987-03-10)

## Description

The present invention relates to an outer mirror assembly which is attached to the side door of a vehicle and, more particularly, to an outer mirror assembly which has both innovative structure and functionality.

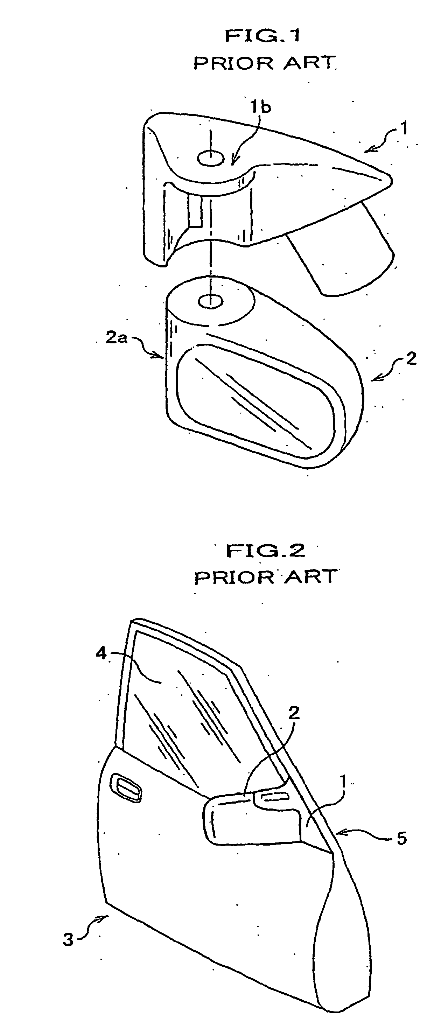

An outer mirror assembly for a vehicle has been known, which has a mirror base extending outwardly from the triangle corner portion of a side window and a mirror housing with a rear view mirror supported by the mirror base. The mirror housing of this outer mirror assembly is supported on the mirror base. In contrast to this, the other type of outer mirror assembly, in which a mirror housing is supported downwardly by a mirror base as shown in FIG.1 is introduced in Japanese Published Patent Application 10-315928 (hereinafter referred to as "document No.1' and showing the features of the preamble of claim 1). More specifically, a mirror housing 2 is supported pivotally by a support portion 1b which extends integrally from a mirror base 1 and overhangs the mirror housing 2. As shown in FIG.2, the outer mirror assembly is mounted onto a vehicle body in such a manner that the mirror base 1 is attached to a triangle corner portion 5 situated at the forward end of a side window 4 of a side door 3.

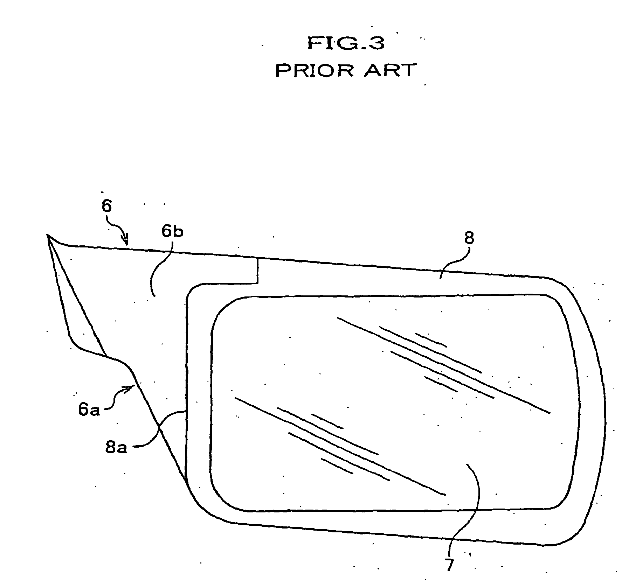

Japanese Published Utility Application 6-65095 (hereinafter referred to as "document No.2") reports another outer mirror assembly, which has an upper portion 6b of a mirror base 6 and a side portion 8a of a mirror housing 8 cooperatively supporting the mirror housing 8 that houses a rear view mirror 7, as shown in FIG.3.

However, the conventional outer mirror assemblies described above have not solved problems below.

The outer mirror assembly disclosed in the document No.1, in which a side portion 2a facing a vehicle body completely contacts the inner surface of the mirror base 1, gives an impression that the assembly including the mirror base 1 and mirror housing 2 looks massive. This may have resulted in a limitation of types of vehicle, to which the outer mirror assembly is applied. On the other hand, the outer mirror assembly disclosed in the document No.2, in which the lower portion 6a of the mirror base 6 has a cutout compared with that described in the document No.1, has the side portion 8a of the mirror housing 8 which is completely covered by the mirror base 6. Furthermore, the upper portion 6b of the mirror base 6, which has thicker structure and massive appearance, limits types of vehicle onto which the outer mirror assembly is mounted as well as that described in the document No.1.

In this way, these outer mirror assemblies described above, which have the side portions 2a and 8a that face the vehicle bodies and are covered by the mirror bases 1 and 6, respectively, have not allowed the practical use of these portions.

Wind noise caused by pressure disturbance at the surface of a side window, which is created by hitting of wind stream disturbed by an outer mirror assembly during vehicle traveling, results in noise experienced in a cabin. The outer mirror assembly shown in the document No.1 has a problem that it tends to create much noise resulting from wind noise. The reason for this is that the outer mirror assembly, in which the side portion 2a facing the vehicle body is completely covered by the mirror base 1, does not provide a passage for releasing the wind stream so that the wind stream is susceptible to disturbance by the outer mirror assembly. On the other hand the outer mirror assembly described in the document No.2 also has the similar problem. Although the mirror assembly which has the lower portion 6a having the cutout can release the wind stream to some extent, the cutout is too small and shallow to provide an efficient passage for the wind stream, thereby resulting in noise in a cabin originating in the wind noise.

The outer mirror assembly disclosed in the document No.1 has tended to have raindrops remain on the side window during a vehicle traveling on a rainy day. This is caused by the raindrops which are not blown off by the wind stream because the mirror assembly which does not have the passage for releasing the wind stream is likely to create an air pocket. The area of side window where the raindrops tend to remain generally falls in an upper area facing the mirror assembly because the wind stream around the mirror assembly forms a diagonally upward stream from forward to backward relative to the vehicle body. These raindrops will block the view of a driver at a river seat when he sees the mirror of mirror assembly. In this way, the mirror assembly has not been able to keep good visibility on a rainy day. On the other hand the outer mirror assembly disclosed in the document No.2, which has small and shallow cutout, has not been able to blow off the raindrops remaining on the side window satisfactorily by the wind stream. Therefore, this mirror assembly has not been able to maintain good visibility on a rainy day, either.

A pillar attached to the side end of a front window, which is reinforced thicker for safety in case of a collision, has tended to increase a dead angle zone relative to the side of a vehicle body. The outer mirror assembly disclosed in the document No.1, which has united structure without a cutout from the mirror base 1 to the mirror housing 2, creates a dead angle zone inevitably. More specifically, if the mirror assembly is attached to the triangle corner portion 5 located at the forward end of the side window 4, the triangle corner portion 5 and the whole mirror assembly cause blocking for the side view, thereby creating the dead angle zone.

In this way, this outer mirror assembly, which creates the large dead angle zone cooperating with the triangle corner portion 5 and the pillar, tends to decrease visibility relative to the side of the vehicle body.

Although the dead angle zone can be decreased if the visibility through the triangle corner portion 5 is sustained by attaching the mirror assembly offset from it upwardly or downwardly, it may result in following new problem.

If the mirror assembly is attached offset upwardly from the triangle corner portion 5, a driver tends to feel uncomfortable because he is forced to shift his line of sight higher than usual while he sees the mirror of the mirror assembly for rear safety. On the other hand, if the mirror assembly is attached offset downwardly, it may not be possible to avoid increase in its size because its supporting element is adapted to be larger inevitably to support the mirror at the same height. Therefore, these modifications described above are considered to be impracticable.

The outer mirror assembly disclosed in the document No.2, which has less effect on the visibility through the triangle corner portion 5 by introducing the cutout, has not solve the problem described above, either.

The present invention seeks to provide an outer mirror assembly, which has visual impression of light weight and is applicable to many types of vehicle. The outer mirror assembly also preferably provides the following advantages. It allows flexibility for using the side of a mirror housing, which faces a vehicle body. In addition, it can not only reduce noise in a cabin originating in a wind stream but also improve visibility on a rainy day. Furthermore, it can reduce a dead angle zone relative to the side of the vehicle body.

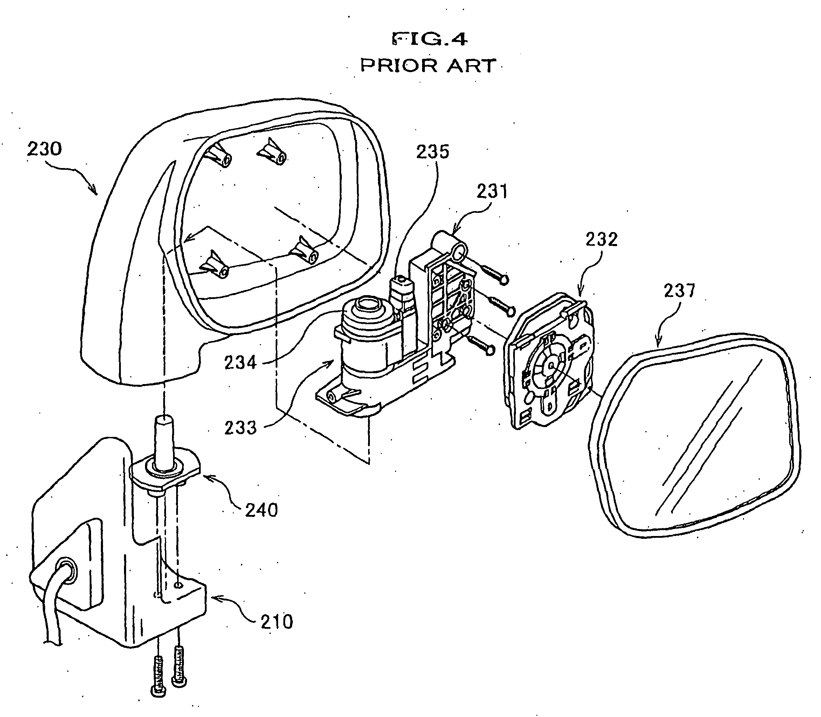

As shown in FIG.4, a conventional retractable outer mirror assembly mainly includes a mirror base 210 extending outwardly from the side of a vehicle body, a shaft 240 fixed on the mirror base 210, a mirror housing 230 coupled pivotably to the shaft 240, a mirror 237 disposed in the rear opening of the mirror housing 230. A frame 231 is disposed in the mirror housing 230. An actuator 232 to control the direction of the mirror 237 and a drive unit 233, which positions the mirror housing 230 in a stored or operating position, are attached to the frame 231. The drive unit 233 includes a motor 235 for producing drive power and reduction gear mechanism 234 coupled to the shaft 240. Drive power of the motor 235 is transmitted to the shaft 240 via the reduction gear mechanism 234. The mirror housing 230, which rotates about the shaft 240 while the motor 235 is driven, is retracted or restored to the operating position according to its rotational direction.

Another outer mirror assembly has recently been proposed, onto which a lamp illuminating a step or a door knob, or a winker (a turn signal lamp) is mounted. Japanese Published Utility application 3-52250 and Japanese Published Patent Application 07-228194 disclose the related art described above.

This outer mirror assembly, in which a wire harness for supplying electricity to the lamp is routed through a shaft, can not accommodate all harnesses because their number is limited according to its inner diameter. In this way, addition of wire harness results in not only imposing restrictions on parts to be installed in the mirror housing but also increase in time associated with assembling of the mirror assembly.

These problems described above may be solved by another outer mirror assembly disclosed in Japanese Published Patent Application 8-324342, in which a light unit is attached to a mirror base. This mirror assembly may simplify assembling because it is not necessary to route a wire harness for the lamp to the mirror housing any more.

Because the outer mirror assembly disclosed in Japanese Published Patent Application 8-324342 whose mirror base is placed under the mirror housing, the light unit attached to the mirror base inevitably lies under the mirror housing. Therefore, when it is observed from a position higher than that of the mirror housing, the light unit such as a winker or stop lamp attached to the mirror base may not provide good visibility because the mirror housing acts as an obstacle.

EP 0 333 220 A discloses a rear-view mirror having a mirror housing which receives the mirror plate and a holding arm which holds the mirror housing and extends at least approximately horizontally and whose height is substantially smaller than that of the mirror housing.

An outer mirror assembly of the present invention, to which a light unit such as a winker (i.e. indicator) or stop light is attached, can provide the following benefits. For example, addition of the light unit may not impose restriction on parts assembled into a mirror housing because it is no more necessary to route a harness through a shaft. In this way, the mirror assembly can provide easier assembly and sufficient visibility for the light unit when it is observed by the third person.

The invention relates to an outer mirror assembly as defined by the claims.

An aspect of the present invention provides an outer mirror assembly for a vehicle, which includes a mirror base extending outwardly from a side of a vehicle body, or which in use extends outwardly from a side of a vehicle body and a mirror housing suspended from the mirror base. The mirror base has a base lens cover which diffuses light irradiated by a light source and the light source is installed in either the mirror base, or is installed or installable in the vehicle body.

The outer mirror assembly described above, which introduces the base lens cover that diffuses the light irradiated by the light source, can improve the visibility of the light. It also allows easier assembly because the light source is disposed in either the mirror base or the vehicle body and it is not necessary to route a wire harness to the mirror housing any more, through which electricity is supplied for the light source.

If a pair of conventional outer mirror assemblies, in which winkers are installed in mirror housings, is attached to a vehicle body on both sides of driver and passenger seats in different setting angles of the mirror housings so as to provide better visibility for a driver, the winkers are inevitably laid out asymmetrically. This results in violation of Japanese law which requires that a pair of winkers shall be symmetrically disposed on both sides of a vehicle body. In contrast to this, the outer mirror assembly of the present invention can satisfy the requirements of the law because the winkers are installed in the mirror bases, which are attached to the vehicle body symmetrically.

A still further aspect of the present invention provides an outer mirror assembly, in which a base lens cover is disposed on at least one of forward and backward sides of a mirror base.

The outer mirror assembly described above, which has the base lens cover installed on either forward or backward surface of the mirror base, light irradiated by a light source can be better recognized from in front or behind.

A yet further aspect of the present invention provides an outer mirror assembly, in which a bottom wall of a mirror base has a first hole through which a fastener for suspending a mirror housing is inserted. Also in the outer mirror assembly, a base lens cover has an attachment portion which is secured to the bottom wall of the mirror base and the attachment portion has a second hole, through which the fastener is inserted, being aligned with the first hole.

The outer mirror assembly described above allows the attachment of the base lens cover to the mirror base using the fastener prepared for the attachment of the mirror housing to the mirror base. The outer mirror assembly achieves reduction in both number of parts and man-hour cost associated with the assembly work, thereby resulting in reduction in a product cost. Furthermore, the outer mirror assembly allows design flexibility and simpler manufacturing because it does not require an additional boss or mounting hole for attaching the base lens cover to the mirror base.

Another aspect of the present invention provides an outer mirror assembly, in which a mirror base has a first engagement element and a base lens cover has a second engagement element. When the first and second engagement elements are engaged, first and second holes are adapted to be aligned.

The outer mirror assembly described above, which has the first and second engagement elements, can make it easier to attach both the base lens cover and the mirror housing to the mirror base. When the first and second engagement elements are engaged, the base lens cover and the mirror base are temporarily fixed, and the first and second holes are aligned. In this way, the base lens cover and the mirror housing can be attached to the mirror base only by inserting the fastener into the holes and fastening it.

Still another aspect of the present invention provides an outer mirror assembly, in which a base lens cover is slid from the opposite side of a first engagement element relative to a first hole so that a second engagement element can be engaged with the first engagement element.

The outer mirror assembly described above can increase attachment strength because the engagement of the first and second engagement elements restricts the displacement of base lens cover in a direction of the first engagement element to the first hole.

Yet another aspect of the present invention provides an outer mirror assembly, in which a mirror housing has a housing lens cover which diffuses light irradiated by a light source.

The outer mirror assembly described above, which has the housing lens cover, adds a new function to the mirror housing so as to serve as a winker or a stop lamp without an additional light source because the mirror housing also diffuses the light irradiated by the light source placed in a mirror base or a vehicle body.
FIG.1 is an exploded perspective view showing a conventional outer mirror assembly.
FIG.2 is a perspective view showing an outer mirror assembly shown in FIG.1, which is attached to the side door of a vehicle.
FIG.3 is a front view showing another conventional outer mirror assembly.
FIG.4 is a perspective view showing the other conventional outer mirror assembly.
FIG.5 is a perspective view showing an outer mirror assembly according to the present invention.
FIG.6 is an exploded perspective view showing an outer mirror assembly according to the present invention.
FIG.7A is a front view showing an example for layout of an outer mirror assembly.
FIG.7B is a front view showing the other example for layout of an outer mirror assembly.
FIG.8 is an exploded perspective view showing an example of modified mirror base and base lens cover.
FIG.9 is an exploded perspective view showing the other example of modified mirror base and base lens cover.
FIG.10A is an exploded perspective view showing a mirror base and a base lens cover. FIG.10B is an exploded perspective view showing an example of modified mirror base and base lens cover.
FIG.11A is an exploded perspective view showing the other example of modified mirror base and base lens cover. FIG.11B is a side view of FIG.11A.
FIG.12 is a perspective view showing an outer mirror assembly according to the present invention.
FIG.13 is a perspective view showing an example of modified mirror base.

Embodiments of the present invention are now described with reference to the accompanying drawings. In the following description, a common symbol is used for the same item among the embodiments and description of the item would not be repeated. "Forward and backward", "right and left", and "upward and downward" are intended to mean the directions relative to a vehicle body with an outer mirror assembly attached, as viewed from a driver seat.

### a. First Embodiment

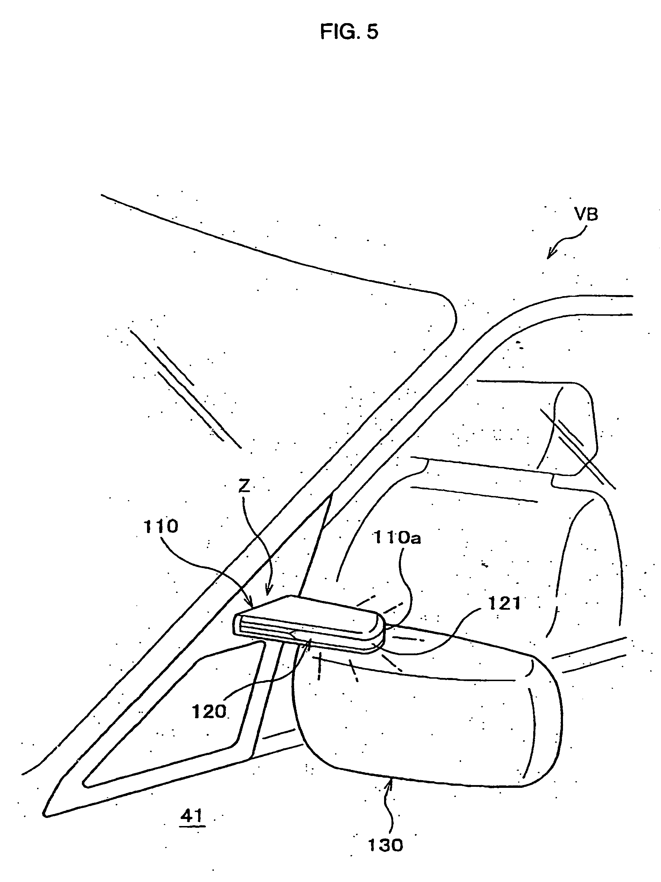

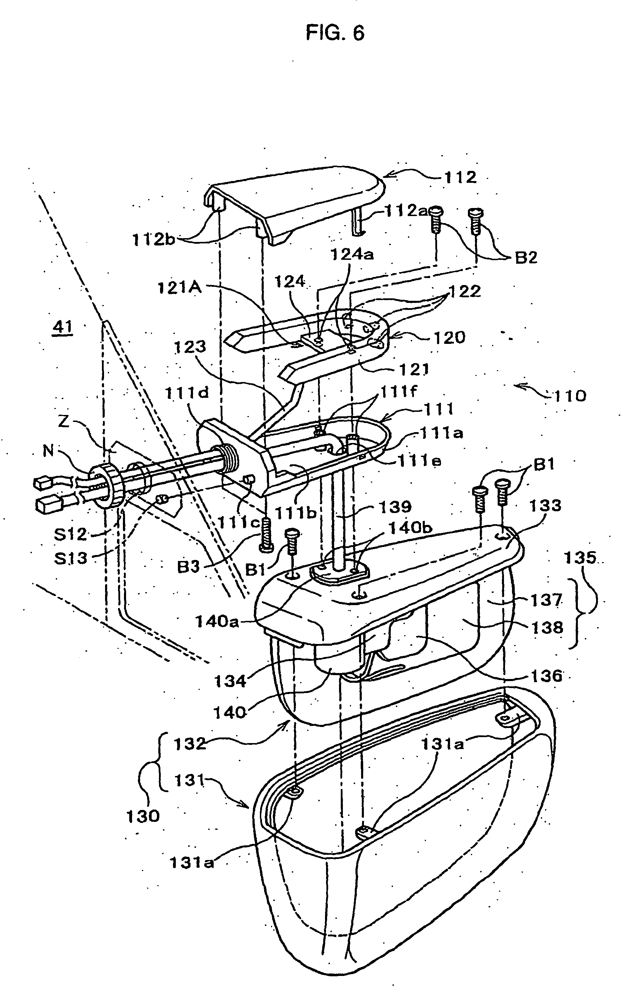

As shown in FIGS.5 and 6 an outer mirror of a first embodiment, which is a typical door mirror attached to a side door 41 of a vehicle body VB, includes a mirror base 110 extending outwardly from the side surface of the side door 41 and a mirror housing 130 suspended from the mirror base 110. A mirror 137 for rear view lies in the backward opening of the mirror housing 130, and a light unit 120 is provided in the mirror base 110. The following description is given for a case where the light unit 120 is used as a winker (a turn signal lamp) or a hazard lamp.

The outer mirror assembly of the first embodiment is an electrically retractable type and the mirror housing 130 is pivotably attached to a shaft 140 as shown in FIG.6, which is secured to a bottom wall 111b of the mirror base 110.

The mirror base 110 of the first embodiment, which is made of synthetic resin, is secured to a mounting base Z provided at the forward end of the side door 41. The mirror base 110 includes a base 111 having an upper opening and a cover 112 which closes the upper opening. The light unit 120 lies between the base 111 and the cover 112.

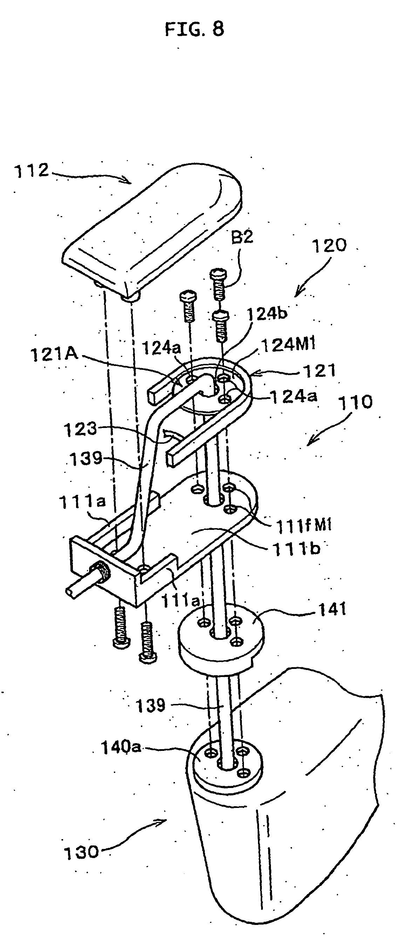

The base 111 includes the bottom wall 111b and a side wall 111a projecting upwardly from the periphery of the bottom wall 111b. A projection 111c and a threaded shaft 111d, which has threads on its outer circumferential surface, project from the surface of the side wall 111a, which faces a vehicle body VB. On the other hand, a guide hole 111e and a boss into which a first hole 111f (hereinafter referred to as "a mounting hole 111f") is drilled are provided on the bottom wall 111b. A screw B2 is inserted into the mounting hole 111f, which secures the mirror housing 130 to the mirror base 110 in a suspended configuration. A wire harness 139 is routed through the guide hole 111e, which carries signals and electric power for controlling components housed in the mirror housing 130. It may be possible to adjust the coverage of side wall 111a according to the shape of a base lens cover 121. For example as shown in FIG.8, when the base lens cover 121 is directly attached to the upper surface of the bottom wall 111b, it may be unnecessary to provide the side wall 111a where the base lens cover 121 occupies.

As shown in FIG.6, a claw 112a and a boss with a boss with a boss hole 112b project from the inner surface of the cover 112. When the cover 112 is attached to the base 111, the claw 112a is hooked to the inner surface of the side wall 111a and a screw B3 is screwed into the boss hole 112b.

As shown in FIG.6, the light unit 120 includes the hollow base lens cover 121 and a light source 122 which is housed in the base lens cover 121. The lens cover 121 has an attachment portion 121A, which is secured to the bottom wall 111b.

The base lens cover 121, which diffuses light irradiated by the light source 122, is made of U-shaped transparent or translucent synthetic resin or glass. The base lens cover 121 is installed in a side plane 110a, forward and backward planes of the mirror base 110. It is not limited to the shape of the base lens cover 121 as shown in the figures. For example, it may be possible to select a J-shaped base lens cover 121 as shown in FIG.8. It may also be possible to select an L-shaped base lens cover 121, so that it is installed in the side plane 110a and the forward or backward plane of the mirror base 110. It may further be possible to select other types of base lens cover 121, such as a cover which only covers the side plane 110a, or the other separate type of covers for the forward and backward planes respectively.

The attachment portion 121A of the first embodiment, including an attachment plate 124 which bridges the inner surface of the base lens cover 121, is placed on the upper surface of boss projecting from the bottom wall 111b of the mirror base 110. A second hole 124a (hereinafter referred to as "a through hole 124a"), through which a screw B2 is inserted, is drilled into the attachment plate 124. The through hole 124a is aligned with the mounting hole 111f. This arrangement allows attachment of the base lens cover 121 to the base 111 of the mirror base 110 making use of the screw B2, which is provided for the attachment of the mirror housing 130 to the mirror base 110. In this way, it is unnecessary to prepare a dedicated fastener for the attachment of base lens cover 121 to the base 111, resulting in a reduction in the number of parts and man-hours required for assembly, so that it may be possible to decrease a product cost for the outer mirror assembly. In addition, because it is unnecessary to provide additional bosses and mounting holes for the base 111, which are intended for the attachment of the base lens cover 121 to the base 111, the outer mirror assembly can not only increase flexibility for designing but also provide simpler manufacturing. Furthermore, the attachment plate 124, which bridges the inner surface of the U-shaped base lens cover 121, serves as a beam, thereby increasing its stiffness.

The light source 122 includes a light emitting diode or an incandescent lamp. When a driver turns on a turn signal switch (not shown), the light source 122 flashes on and off. A wire harness 123, which supplies electricity and the like to the light source 122, is routed into the vehicle body VB through the hollow threaded shaft 111d and electrically connected to a power source (not shown) and a turn signal switch (not shown).

As shown in FIG.6, the mirror housing 130 is suspended from the mirror base 110 via the shaft 140. The mirror housing 130 includes a lower housing 131 which is made of synthetic resin and has upper and backward openings, and a subassembly 132.

When the subassembly 132 is attached to the lower housing 131, the lower housing 131 is mated with the subassembly 132 from downward and a screw B1 is screwed into a mounting tab 131a. The size and shape of the mirror housing 130 are not limited to those shown in FIG.6 but can be modified according to its design.

As shown in FIG.6, the subassembly 132 includes an upper housing 133, a drive unit 134 and a mirror portion 135, which are all mounted onto a frame 136. The upper housing 133 is made of synthetic resin and attached to the upper opening of the lower housing 131. The drive unit 134 retracts or restores the mirror housing 130 to an operating position. The mirror portion 135 includes a mirror 137 for rear view and an actuator 138 for adjusting the direction of the mirror 137.

The drive unit 134 has a reduction gear mechanism, which is mounted onto the shaft 140, and a motor for supplying drive power. The drive power generated by the motor is transmitted to the shaft 140 via the reduction gear mechanism. When the motor is driven, the mirror housing 130 pivots about the shaft 140. In this way, the mirror housing 130 is retracted or restored to the operating position according to the rotational direction of the motor. The actuator 138 has two motors for tilting the mirror 137 about vertical and horizontal axes, respectively. The direction of the mirror 137 is adjusted by controlling rotational direction of each motor.

The wire harness 139 for supplying electricity to the drive unit 134 and the actuator 138 is routed through the hollow shaft 140. More specifically, the wire harness 139 is routed into the mirror base 110 out of the guide hole 111e of the mirror base 110 via the hollow shaft 140. The wire harness 139 is then routed into the vehicle body VB out of the mirror base 110 via the threaded shaft 111d, finally being electrically connected to a control unit (not shown).

Steps for assembling the outer mirror assembly are described referring to FIG.6.

First, the subassembly 132 is assembled by attaching the drive unit 134 to the frame 136 and subsequently attaching the upper housing 133 as well as the mirror portion 135 to the frame 136. In parallel, the shaft 140 is attached to the drive unit 134 and the wire harness 139 is routed outside via the hollow shaft 140.

Next, after the lower housing 131 is mated with the subassembly 132 from downward, the lower and upper housings 131 and 133 are fastened by the screw B1 to complete the mirror housing 130 while the upper housing 133 is mated with the upper opening of the lower housing 131.

Subsequently, a base 140a of the shaft 140 is rested on the bottom wall 111b after the wire harness 139 is routed through the guide hole 111e. The light unit 120 is then attached to the upper surface of the side wall 111a. After aligning a screw hole 140b, the mounting hole 111f and the through hole 124a drilled into the attachment plate 124, the screw B2 is inserted from above through the aligned holes and screwed into the screw hole 140b. In this way, the base 111 and the light unit 120 are jointed. In this connection, routing of the wire harness 123 can be simplified because it is not necessary to route the wire harness 123 for supplying electricity for the light source 122 through the hollow shaft 140 but just to guide the wire harness 123 into the vehicle body VB via threaded shaft 111d. This also increases flexibility for the wire harness 139 which is routed through the hollow shaft 140. This may relax limitation for the diameter and number of the wire harness 139. In other words, the outer mirror assembly of the first embodiment can provide flexibility for the parts housed within the mirror housing 130.

After routing the wire harnesses 123 and 139 out of the threaded shaft 111d, the cover 112 is mated with the base 111 and the screw B3 is screwed into the boss hole 112b. In this way, the base 111 and the cover 112 are jointed.

The wire harnesses 123 and 139, which are routed out of the threaded shaft 111d, are guided into the vehicle body VB through a guide hole S12 drilled into the mounting base Z of the side door 41. The threaded shaft 111d and the projection 111c are inserted into the guide hole S12 and a through hole S13, respectively. Finally, the threaded shaft 111d which reaches this side of the mounting base Z through the guide hole S12 is fastened with a nut N, as shown in FIG.6. This completes mounting of the outer mirror assembly onto the vehicle body VB.

As shown in FIG.5, the visibility for the light irradiated by the light source 122 is remarkably improved because the mirror base 110 is located above the mirror housing 130. It is possible to recognize the light irradiated by the light source 122 more clearly from the forward or backward of the vehicle body VB because the base lens cover 121 is installed in the forward and backward planes of the mirror base 110 as well as the side plane 110a.

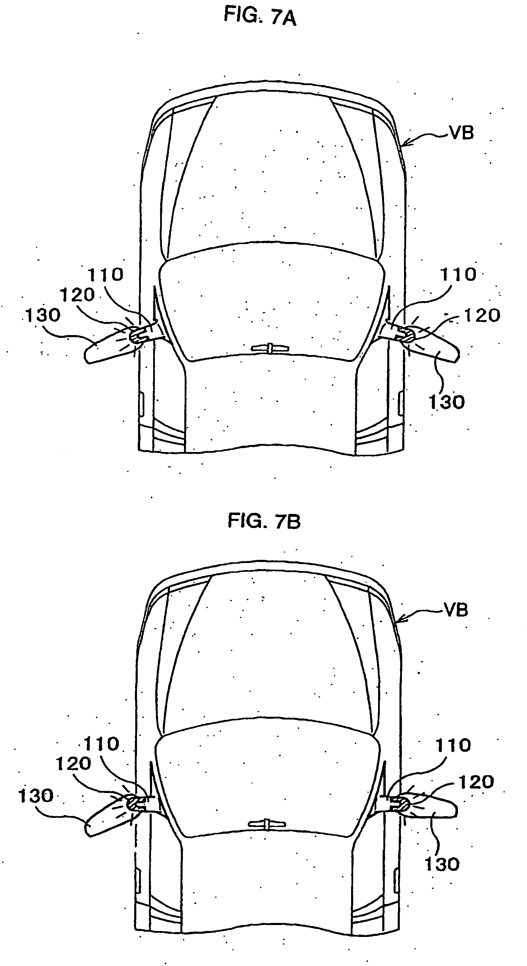

The Japanese Law requires that a pair of winkers shall be mounted onto both sides of a vehicle symmetrically. If a pair of outer mirror assemblies according to the present invention is symmetrically laid out in a right-left direction on a vehicle as shown in FIGS.7A and 7B, it may be possible to satisfy this requirement. The outer mirror assembly has an advantage that it may be possible to select different setting angles for a pair of mirror housings 130 which is attached to both sides of driver and passenger seats as shown in FIG.7B because winkers are disposed in symmetrically attached mirror bases 110. This flexibility for the setting angles allows relaxation in requirements for the range of adjustment driven by the actuator 138. This will result in a smaller envelope required for movement of the actuator 138, thereby increasing design flexibility for the mirror housing 130.

The outer mirror assembly, which has the light unit 120 in the mirror base 110, can serve as a winker or a hazard lamp independent of the position of the mirror housing 130, namely a stored or operating position. For example, even if the mirror housing 130 is retracted while the vehicle is at a stop, the outer mirror assembly can continue serving as a winker or a hazard lamp because the light unit 120 is fixed at the mirror base 110.

It may be possible to select other shapes for the mirror base 110 and the base lens cover 121 alternatively, not being limited to those shown in FIG.6.

The mirror base 110 shown in FIG.6 has the mounting hole 111f drilled into the boss projecting from the bottom wall 111b of the base 111, for example. As an alternative, it may be possible to select a mounting hole 111fM1 directly drilled into the bottom wall 111b as shown in FIG.8. In this case, an attachment plate 124M1 is laid above the bottom wall 111b. A guide hole 124b is drilled into the attachment plate 124M1, through which the wire harness 139 is routed, corresponding to the guide hole 111e of the base 111. In this connection, the outer mirror assembly shown in FIG.8 has a base plate 141 between the mirror housing 130 and the mirror base 110, which restricts the range of pivoting of the mirror housing 130.

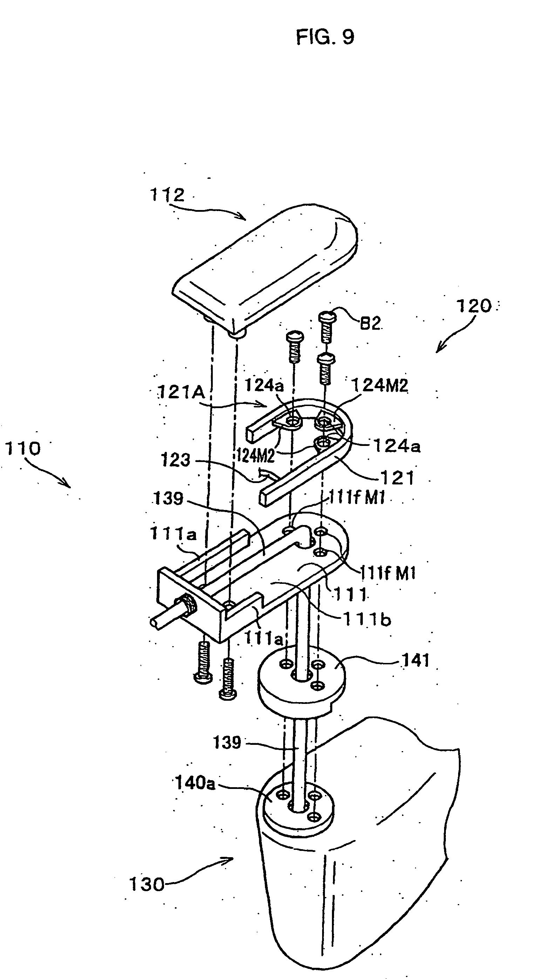

As shown in FIG.9, it may be possible to select a plurality of tabs124M2 projecting from the inner surface of the base lens cover 121 instead of the attachment plate 124, which serves as the attachment portion 121A in the base lens cover 121 as shown in FIG.6. The tabs 124M2 are positioned so that they are aligned with the mounting holes 111fM1. And each tab 124M2 has a through hole 124a.

### b. Second Embodiment

As shown in FIG.10A, an outer mirror assembly of a second embodiment has an engagement mechanism for assembling a mirror base 110 and a base lens cover 121. In the following description, a common symbol is used for the same item as that of the first embodiment and description of the item would not be repeated.

The outer mirror assembly has a first engagement element 115 on a base 111 of the mirror base 110 and a second engagement element 126, which is engaged with the first engagement element 115, on an attachment plate 124. When the first and second engagement elements 115 and 126 are engaged, a mounting hole 111fM1 and a through hole 124a are adapted to be aligned.

The first engagement element 115 includes a T-shaped projection 115a, which projects from a bottom wall 111b of the base 111. On the other hand, the second engagement element 126 includes a cutout 126a, which is adapted to mate with the projection 115a.

The outer mirror assembly described above brings benefit that attachment of the base lens cover 121 and the mirror housing (not shown) to the base 111 can be done more efficiently. The reason for this is explained in the following manner. When the second engagement element 126 is engaged with the first engagement element 115, not only the base lens cover 121 is temporarily fixed with the base 111, but also the mounting hole 111fM1 and the through hole 124a are aligned. In this way, if a screw B2 is inserted into the through hole 124a and fastened while the mirror housing (not shown) is rested on the lower surface of the base 111, it may be possible to securely attach both the lens cover 121 and the mirror housing to the base 111 without effort.

In this connection, it may be possible to select alternative shapes for the first and second engagement elements 115 and 126, respectively.

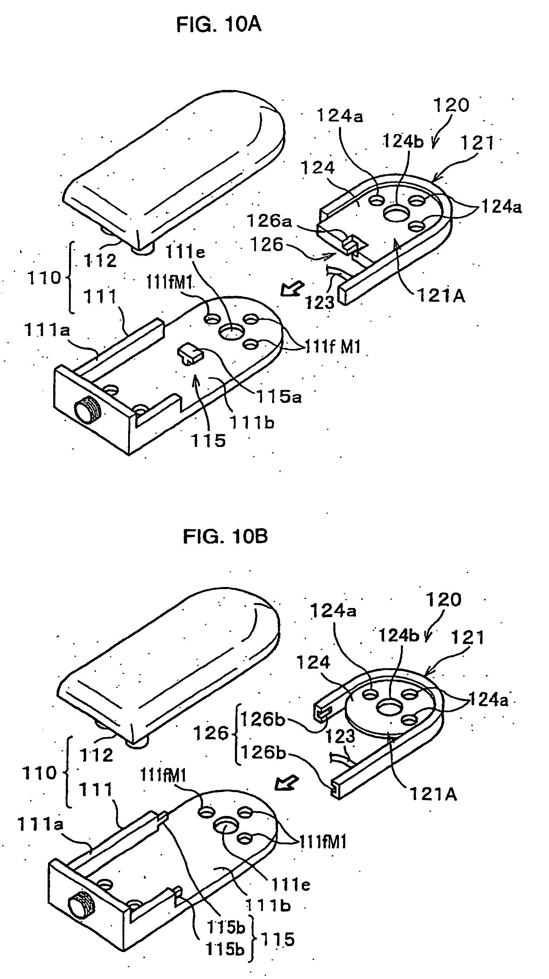

An example is shown in FIG.10B. It may be possible to select a male element 115b formed at the end of a side wall 111a instead of the first engagement element 115, and a female element 126b formed at the end of the base lens cover 121 instead of the second engagement element 126.

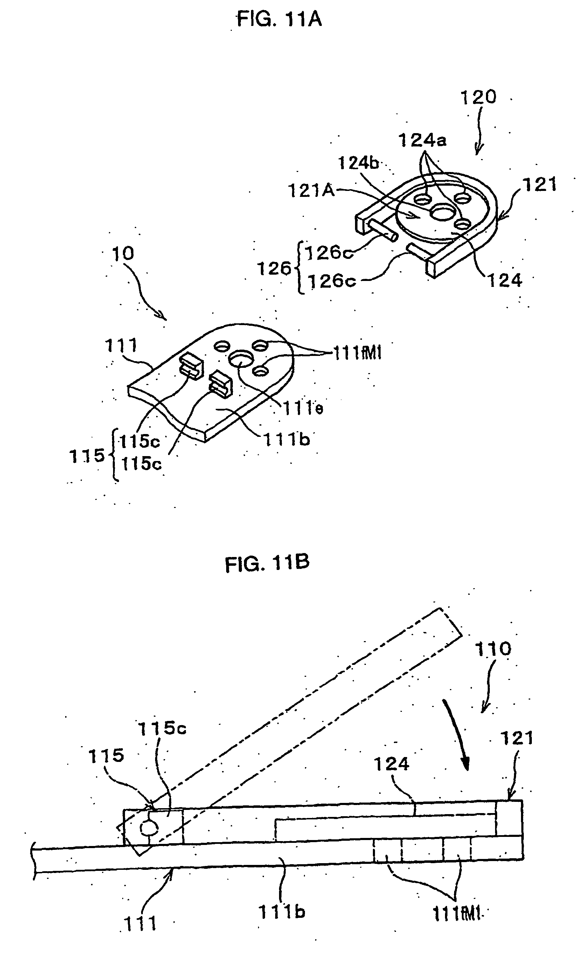

As shown in FIG.11A, it may also be possible to lay the second engagement element 126 at this side of the first engagement element 115 and engage these two elements. The cover for the base 111 is omitted for convenience sake in FIG.11A.

As shown in FIG.11A, the first engagement element 115 includes a pair of projections 115c provided on the bottom wall 111b. Each projection 115c has a recess on its further surface relative to the mounting hole 111fM1. The second engagement element 126 includes a pair of sticks 126c, which is adapted to be engaged with recesses of the projections 115c.

As shown in FIG.11B, the base lens cover 121 is able to pivot about the pair of sticks 126c in a vertical direction because they are adapted to be aligned to each other. When the base lens cover 121 is attached to the base 111, the mounting hole 111fM1 and the through hole 124a can easily be aligned in the following manner. First, the sticks 126c are engaged with the projections 115c while the base lens cover 121 is tilted. And the base lens cover 121 is pivoted downwardly about the sticks 126c.

In this way, if the screw B2 is inserted into the through hole 124a and fastened while the mirror housing (not shown) is rested on the lower surface of the bottom wall 111b, it may be possible to securely attach both the lens cover 121 and the mirror housing to the base 111 without effort. The outer mirror assembly described above, which has the first and second engagement elements 115 and 126, increases attachment strength because it prevents the displacement of the base lens cover 121 in a direction from the first engagement element 115 to the mounting hole 111fM1.

### c. Third Embodiment

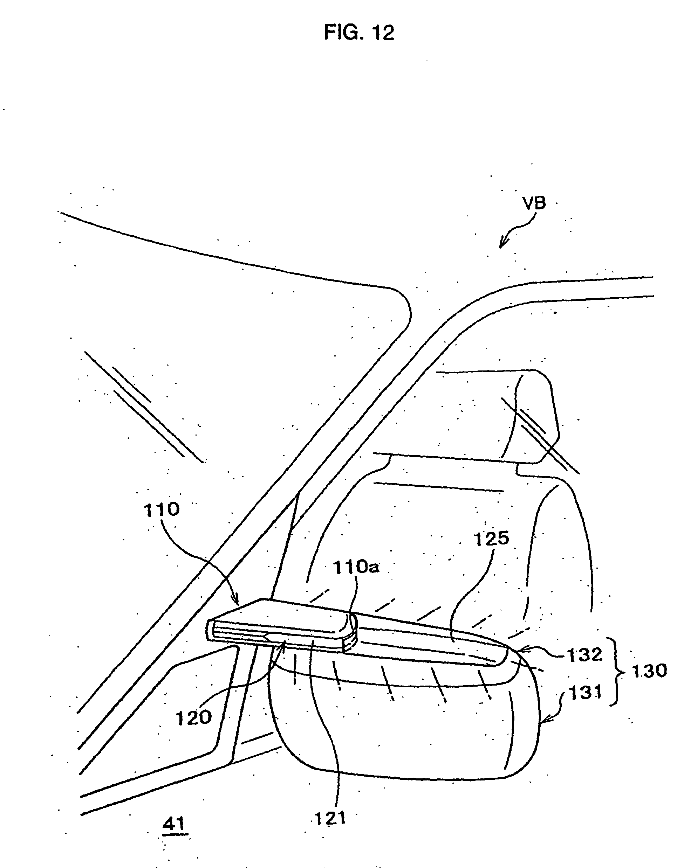

As shown in FIG.12, an outer mirror assembly of a third embodiment includes a housing lens cover 125 on an upper housing 132.

Description for a mirror base 110, a light unit 120 and a mirror housing 130 would not be repeated because they are the same as those in the first embodiment.

The housing lens cover 125, which is made of transparent or translucent synthetic resin or glass, diffuses light irradiated by a light source 122 housed in a light unit 120. When the mirror housing 130 is in an operating position, the inner end surface of the housing lens cover 125 relative to a vehicle body VB lies close to a side plane 110a of the light unit 120.

The outer mirror assembly of the third embodiment allows the mirror housing 130 to serve as a winker without preparing a new light source in the mirror housing 130 because the housing lens cover 125 diffuses light irradiated by the light source 122 housed in the mirror base 110.

When the mirror housing 130 is in the operating position, the light unit 120 and the mirror housing 130 can cooperatively work as a winker or a hazard lamp while a vehicle is at a stop. In addition, when the mirror housing 130 is retracted, the light unit 120 independently serves as a hazard lamp. The outer mirror assembly of the third embodiment, which has the light unit 120 at the mirror base 110, can continuously serve as a winker or hazard lamp independent of the position of the mirror housing 130, namely the retracted or operating position.

It is not limited to the outer mirror assembly which serves as a winker or hazard lamp described above, but it may be possible to install a base lens cover only in the backward plane of the mirror base 110 so that the outer mirror assembly can serve as a stop lamp. In addition, if a lens cover is installed into a bottom wall 111b, it may be possible to add a function of lamp which illuminates around the door knob or step to the outer mirror assembly.

It is noted that it may be possible to use a cover 112 as a base lens cover if it is made of a transparent or translucent material.

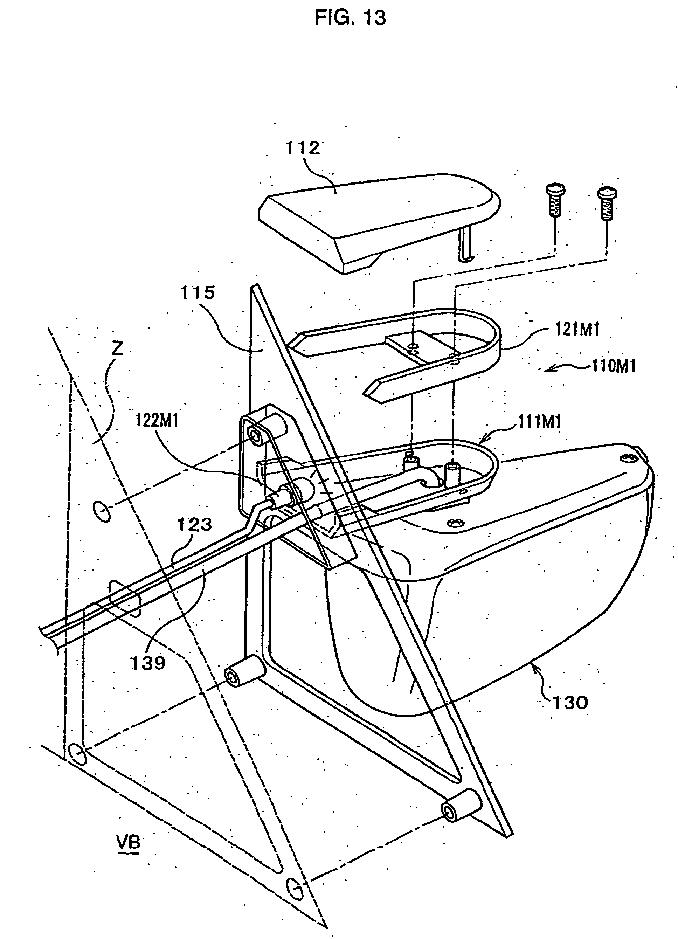

It is not limited to the mirror base 110 as shown in FIG.6, which is made of the base 111 and the cover 112. For example, it may be possible to select a mirror base 110M1 as shown in FIG.13, which is made of a base 111M1 that is integrally formed with a mounting plate 115 and a cover 112. In this case, the outer mirror assembly is attached to a vehicle body VB by the attachment of the mounting plate 115 to a mounting base Z of a side door 41.

It is not limited to the outer mirror assembly described above which has the light unit 120 including the base lens cover 121 and the light source 122 at the mirror base 110 as shown in FIGS.5 and 12. For example, it may be possible to select a mirror base 110M1, in which only a base lens cover 121M1 is attached to a base 111M1 and a light source 122M1 is installed at a mounting plate 115. Furthermore, it may be possible to place a light source (not shown) at a mounting base Z.

Although the outer mirror assembles described in the above embodiments are an electrically retractable type, the present invention can be applied to other types such as manually retractable and fixed ones.

## Claims

1. An outer mirror assembly for a vehicle comprising:
a mirror base (110) extending outwardly from a side of a vehicle body (VB); and
a mirror housing (130) suspended from the mirror base (110), **characterized in that**
the mirror base (110) has a base lens cover (121) which diffuses light irradiated by a light source (122), and
the light source (122) is installed in one of the mirror base (110) and the vehicle body (VB).

2. An outer mirror assembly according to claim 1 wherein the base lens cover (121) is disposed on at least one of forward and backward sides of the mirror base (110).

3. An outer mirror assembly according to claim 1 or 2 wherein a bottom wall (111b) of the mirror base (110) has a first hole (111f) through which a fastener (B2) for suspending the mirror housing (130) is inserted, and wherein the base lens cover (121) has an attachment portion (121A) which is secured to the bottom wall (111b) of the mirror base (110) and the attachment portion (121A) has a second hole (124a), through which the fastener (B2) is inserted, being aligned with the first hole (111f).

4. An outer mirror assembly according to claim 3 wherein the mirror base (110) has a first engagement element (115) and the base lens cover (121) has a second engagement element (126), and wherein when the first and second engagement elements (115 and 126) are engaged, the first and second holes (111f and 124a) are adapted to be aligned.

5. An outer mirror assembly according to claim 4 wherein the base lens cover (121) is slid from the opposite side of the first engagement element (115) relative to the first hole (111f) so that the second engagement element (126) can be engaged with the first engagement element (115).

6. An outer mirror assembly according to any one of claims 1 to 5 wherein the mirror housing (130) has a housing lens cover (125) which diffuses the light irradiated by the light source (122).

## Patentansprüche

1. Außenspiegelanordnung für ein Fahrzeug, umfassend:
eine Spiegelbasis (110), die sich von einer Seite einer Fahrzeugkarosserie (VB) aus nach außen erstreckt; und
ein an der Spiegelbasis (110) aufgehängtes Spiegelgehäuse (130);
**dadurch gekennzeichnet, dass** die Spiegelbasis (110) eine Basislinsenabdeckung (121) aufweist, die das von einer Lichtquelle (122) ausgestrahlte Licht streut, und dass
die Lichtquelle (122) in der Spiegelbasis (110) oder in der Fahrzeugkarosserie (VB) eingebaut ist.

2. Außenspiegelanordnung nach Anspruch 1, worin die Basislinsenabdeckung (121) an zumindest einer aus der Vorder- und der Rückseite der Spiegelbasis (110) angeordnet ist.

3. Außenspiegelanordnung nach Anspruch 1 oder 2, worin eine Bodenwand (111b) der Spiegelbasis (110) ein erstes Loch (111f) aufweist, durch welches ein Befestigungsmittel (B2) zum Aufhängen des Spiegelgehäuses (130) eingeführt ist, und worin die Basislinsenabdeckung (121) einen Befestigungsabschnitt (121A) aufweist, der an der Bodenwand (111b) der Spiegelbasis (110) angebracht ist und der Befestigungsabschnitt (121A) ein zweites Loch (124a) aufweist, durch welches das Befestigungsmittel (B2) eingeführt ist und das mit dem ersten Loch (111f) fluchtend ausgerichtet ist.

4. Außenspiegelanordnung nach Anspruch 3, worin die Spiegelbasis (110) über ein erstes Eingreifelement (115) und die Basislinsenabdeckung (121) über ein zweites Eingreifelement (126) aufweisen, und worin das erste und das zweite Eingreifelement (115 und 126) im Eingriff sind, wobei das erste und das zweite Loch (111f und 124a) angepasst sind, um fluchtend ausgerichtet zu sein.

5. Außenspiegelanordnung nach Anspruch 4, worin die Basislinsenabdeckung (121) von der gegenüberliegenden Seite des ersten Eingreifelements (115) aus relativ zum ersten Loch (111f) gleitend geführt ist, sodass das zweite Eingreifelement (126) mit dem ersten Eingreifelement (115) in Eingriff bringbar ist.

6. Außenspiegelanordnung nach einem der Ansprüche 1 bis 5, worin das Spiegelgehäuse (130) über eine Gehäuselinsenabdeckung (125) aufweist, die das von der Lichtquelle (122) ausgestrahlte Licht streut.

## Revendications

1. Rétroviseur extérieur pour un véhicule comprenant:
une base de rétroviseur (110) s'étendant vers l'extérieur depuis un côté de la caisse de véhicule (VB); et
un boîtier de rétroviseur (130) suspendu à la base de rétroviseur (110), **caractérisé en ce que** la base de rétroviseur (110) possède un couvercle de lentille de base (121) qui diffuse la lumière diffusée par une source de lumière (122) et
la source de lumière (122) est installée dans l'une parmi la base de rétroviseur (110) et la caisse de véhicule (VB).

2. Rétroviseur extérieur selon la revendication 1, où le couvercle de lentille de base (121) est disposé sur au moins l'un des côtés avant et arrière de la base de rétroviseur (110).

3. Rétroviseur extérieur selon la revendication 1 ou 2, où une paroi inférieure (111b) de la base de rétroviseur (110) présente un premier trou (111f) à travers lequel un élément de fixation (B2) pour suspendre le boîtier de rétroviseur (130) est inséré, et où le couvercle de lentille de base (121) possède une portion de fixation (121A) qui est fixée à la paroi inférieure (111b) de la base de rétroviseur (110), et la portion de fixation (121A) présente un deuxième trou (124a) à travers lequel l'élément de fixation (B2) est inséré en étant aligné avec le premier trou (111f).

4. Rétroviseur extérieur selon la revendication 3, où la base de rétroviseur (110) possède un premier élément d'engagement (115), et le couvercle de lentille de base (121) possède un deuxième élément d'engagement (126), et où, lorsque les premier et deuxième éléments d'engagement (115 et 126) sont engagés, les premier et deuxième trous (111f et 124a) sont aptes à être alignés.

5. Rétroviseur extérieur selon la revendication 4, où le couvercle de lentille de base (121) est amené à coulisser depuis le côté opposé du premier élément d'engagement (115) relativement au premier trou (111f) de sorte que le deuxième élément d'engagement (126) peut être mis en prise avec le premier élément d'engagement (115).

6. Rétroviseur extérieur selon l'une des revendications 1 à 5, où le boîtier de rétroviseur (130) possède un couvercle de lentille de boîtier (125) qui diffuse la lumière diffusée par la source de lumière (122).
